(19) Europäisches Patentamt
European Patent Office
Office européen des brevets

(11) **EP 3 353 500 B1**

(12) **EUROPÄISCHE PATENTSCHRIFT**

(45) Veröffentlichungstag und Bekanntmachung des Hinweises auf die Patenterteilung:
**02.09.2020 Patentblatt 2020/36**

(51) Int Cl.:
***G01D 5/353*** *(2006.01)*     ***G01B 11/16*** *(2006.01)*
***G01L 1/24*** *(2006.01)*

(21) Anmeldenummer: **16767294.8**

(22) Anmeldetag: **20.09.2016**

(86) Internationale Anmeldenummer:
**PCT/EP2016/072308**

(87) Internationale Veröffentlichungsnummer:
**WO 2017/050766 (30.03.2017 Gazette 2017/13)**

(54) **SENSORPATCH UND VERFAHREN ZUM HERSTELLEN EINES SENSORPATCHES**

SENSOR PATCH, AND METHOD FOR PRODUCING A SENSOR PATCH

PATCH DE DÉTECTION ET PROCÉDÉ DE FABRICATION D'UN PATCH DE DÉTECTION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.09.2015 DE 102015115927**

(43) Veröffentlichungstag der Anmeldung:
**01.08.2018 Patentblatt 2018/31**

(73) Patentinhaber: **FOS4X GmbH**
**81371 München (DE)**

(72) Erfinder:
• **MÜLLER, Mathias**
**82194 Gröbenzell (DE)**
• **ZELENKA, Fabian**
**80807 München (DE)**

(74) Vertreter: **Zimmermann & Partner Patentanwälte mbB**
**Postfach 330 920**
**80069 München (DE)**

(56) Entgegenhaltungen:
**EP-A1- 1 816 432    DE-A1- 19 922 102**
**DE-T2- 69 837 752    US-B1- 6 393 181**
**US-B1- 6 510 272**

**Beschreibung**

TECHNISCHES GEBIET

Ausführungsformen der vorliegenden Erfindung betreffen im Allgemeinen Sensoreinheiten, welche an einem zu überwachenden Messobjekt angebracht werden können, und betreffen insbesondere ein Sensorpatch, in welches ein faseroptischer Sensor eingebracht ist. Ferner betreffen Ausführungsformen der vorliegenden Erfindung ein Verfahren zum Herstellen eines Sensorpatches.

STAND DER TECHNIK

Sensoreinheiten, die auf einem zu überwachenden Messobjekt wie beispielsweise einem Rotorblatt einer Windkraftanlage angebracht werden können, sind im Allgemeinen als Patches aufgebaut, welche zur Erfassung der interessierenden Messgröße relevante Sensorelemente enthalten. In diesem Zusammenhang spielen faseroptische Sensoren eine wichtige Rolle, da diese durch die optische Übertragung von Messsignalen über einen Lichtleiter im Wesentlichen unanfällig gegenüber äußeren Einflüssen wie etwa elektromagnetischen Feldern sind und eine schnelle Datenübertragung bereitstellen. Darüber hinaus weisen faseroptische Sensoren eine gute elektromagnetische Verträglichkeit (EMV) auf. Bei den faseroptischen Sensoren wird das von der Messgröße abgeleitete Messsignal optisch mittels eines Lichtleiters übertragen. Faseroptische Sensoren können hierbei als extrinsische Sensoren ausgelegt sein, bei welchem der Lichtleiter lediglich einem Transport der optischen Strahlung dient. Weit verbreitet ist ferner die Auslegung faseroptischer Sensoren als intrinsische Sensoren, bei welchen das Sensorelement wie beispielsweise ein Faser-Bragg-Gitter (FBG) in der Sensorfaser selbst enthalten ist.

Ein intrinsischer faseroptischer Sensor reagiert empfindlich auf eine mechanische Strukturänderungen wie beispielsweise eine Dehnung und/oder eine Stauchung sowie auf Temperaturänderungen. Zur Messung einer zu erfassenden Größe wird die Sensoreinheit bzw. das faseroptische Sensorelement auf eine geeignete Weise mit dem Messobjekt verbunden, wobei unerwünschte Einflüsse kompensiert und Messempfindlichkeiten eingestellt werden müssen.

US 6 393 181 B1 betrifft eine temperaturstabiles Bragg-Gitter Gehäuse mit Nachregelung zum genauen Abstimmen der Frequenz. DE 199 22 102 A1 betrifft eine Faser-Bragg-Gitter-Sensoranordnung zur Ermittlung physikalischer Größen. DE 698 37 752 T2 befasst sich mit der Messung von geometrischer Lage und Konfigurationen von Gegenständen im Raum. US 6 510 272 B1 betrifft ein temperaturkompensiertes Faser-Bragg-Gitter.

Es ist daher erstrebenswert, Sensorpatches mit faseroptischen Sensoren weiter zu verbessern.

ZUSAMMENFASSUNG DER ERFINDUNG

Gemäß einer Ausführungsform wird ein Sensorpatch gemäß Anspruch 1 bereitgestellt, welches einen Lichtleiter, welcher mindestens ein faseroptisches Sensorelement aufweist, eine Trägerstruktur mit einem ersten Befestigungselement zur Befestigung des Lichtleiters an einer ersten Position und einem von dem ersten Befestigungselement beabstandeten zweiten Befestigungselement zur Befestigung des Lichtleiters an einer zweiten Position, wobei das faseroptische Sensorelement zwischen der ersten Position und der zweiten Position angeordnet ist, einen Zwischenträger mit einer ersten Fläche, auf welchem die ersten und zweiten Befestigungselemente an jeweiligen Befestigungspositionen angebracht sind, und einer gegenüberliegenden zweiten Fläche, welche an einem Messobjekt anbringbar ist, und ein auf dem Zwischenträger angeordnetes und mit diesem verbundenes Abdeckelement umfasst, welches zusammen mit dem Zwischenträger eine etwa senkrecht zu einer Längserstreckung des Lichtleiters orientierte Querschnittsdimension derart aufweist, dass der Lichtleiter in der bei Biegung keine Zug- und Druckspannungen aufweisenden neutralen Faser des Sensorpatches verläuft.

Gemäß einer weiteren Ausführungsform wird ein Verfahren zum Herstellen eines Sensorpatches gemäß Anspruch 14 bereitgestellt. Das Herstellungsverfahren umfasst die Schritte eines Bereitstellens einer Trägerstruktur mit einem ersten und einem zweiten Befestigungselement, eines Verlegens eines Lichtleiters zwischen den ersten und zweiten Befestigungselementen, eines Befestigens des Lichtleiters an den Befestigungselementen, eines Vorspannens des Lichtleiters mittels eines zwischen den Befestigungselementen angeordneten elastischen Elements, eines Anbringens der Trägerstruktur auf einem Zwischenträger und eines Abdeckens der Trägerstruktur mit einem Abdeckelement derart, dass der Lichtleiter in der neutralen Faser des Sensorpatches verläuft.

KURZE BESCHREIBUNG DER ZEICHNUNGEN

Ausführungsbeispiele sind in den Zeichnungen dargestellt und in der nachfolgenden Beschreibung näher erläutert. In den Zeichnungen zeigen:

Figur 1A zeigt schematisch ein Sensorpatch mit einem faseroptischen Sensorelement in einer Querschnittsansicht, gemäß einer Ausführungsform;

Figur 1B zeigt schematisch das in Figur 1A dargestellte Sensorpatch mit zusätzlichem Abdeckelement, wobei der Verlauf der neutralen Faser angegeben ist, gemäß einer Ausführungsform;

Figur 2A zeigt ein Sensorpatch in einer Draufsicht ohne Abdeckelement, gemäß einer Ausführungsform;

Figur 2B zeigt ein Sensorpatch mit Abdeckelement und Verbindungselement in einer Seitenansicht, gemäß einer Ausführungsform;

Figur 3A zeigt schematisch Teile einer Einspannvorrichtung für einen Lichtleiter in einer perspektivischen Ansicht schräg von oben;

Figur 3B zeigt schematisch Teile einer Einspannvorrichtung für einen Lichtleiter mit angebrachtem Abdeckelement und eingelegtem Lichtleiter in einer perspektivischen Ansicht schräg von unten;

Figur 4 zeigt schematisch einen Teil einer Windkraftanlage mit Rotorblättern und daran angebrachten Sensorpatches;

Figur 5 zeigt schematisch einen Messaufbau für ein Sensorpatch gemäß hier beschriebenen Ausführungsformen;

Figur 6 zeigt schematisch einen Messaufbau für einSensorpatch gemäß hier beschriebenen Ausführungsformen; und

Figur 7 zeigt ein Ablaufdiagramm zur Veranschaulichung eines Verfahrens zum Herstellen eines Sensorpatches, gemäß hier beschriebenen Ausführungsformen.

In den Zeichnungen bezeichnen gleiche Bezugszeichen gleiche oder funktionsgleiche Komponenten oder Schritte.

WEGE ZUR AUSFÜHRUNG DER ERFINDUNG

Im Folgenden wird detaillierter Bezug genommen auf verschiedene Ausführungsformen der Erfindung, wobei ein oder mehrere Beispiele in den Zeichnungen veranschaulicht sind.

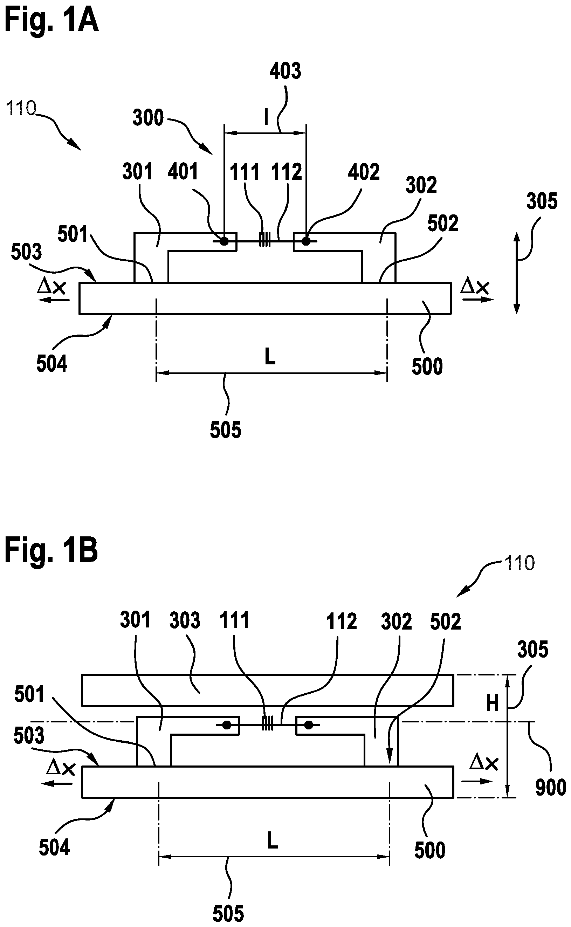

Figur 1A zeigt schematisch ein Sensorpatch 110 mit einem faseroptischen Sensorelement 111 in einer Querschnittsansicht, gemäß einer Ausführungsform. Ferner ist in Figur 1A schematisch eine Einspannvorrichtung 300 für einen Lichtleiter 112 dargestellt. Die Einspannvorrichtung 300 beinhaltet eine Trägerstruktur, welche ein erstes Befestigungselement 301 zur Befestigung des Lichtleiters 112 an einer ersten Position 401 und ein von dem ersten Befestigungselement 301 beabstandetes zweites Befestigungselement 302 zur Befestigung des Lichtleiters 112 an einer zweiten Position 401 aufweist. Zwischen den beiden Positionen 401, 402 weist der Lichtleiter 112 ein Sensorelement 111 auf. Gemäß einer Ausführungsform, welche mit anderen hierin beschriebenen Ausführungsformen kombiniert werden kann, ist das Sensorelement 111 als ein Faser-Bragg-Gitter ausgelegt. Insbesondere ist die Trägerstruktur der Einspannvorrichtung 300 ausgelegt zur Aufnahme eines Lichtleiters 112, welcher mindestens ein zwischen den Befestigungselementen 301, 302 positionierbares Faser-Bragg-Gitter aufweist. Es sei darauf hingewiesen, dass das Sensorelement 111 innerhalb des Lichtleiters 112 in Form eines intrinsischen Sensors angeordnet ist und in Figur 1A nicht maßstabsgetreu dargestellt ist.

Gemäß einer Ausführungsform, welche mit anderen hierin beschriebenen Ausführungsformen kombiniert werden kann, kann die Trägerstruktur ein Material enthalten, welches gewählt ist aus der Gruppe, die besteht aus GFK, Stahl, Aluminium einer ... - Legierung, CFK und jedweder Kombination davon.

Gemäß einer Ausführungsform, welche mit hierin beschriebenen Ausführungsformen kombiniert werden kann, weist mindestens eines der Befestigungselemente 301, 302 eine Aussparung zum Einlegen und Fixieren des Lichtleiters 112 auf. Gemäß einer weiteren Ausführungsform wird der Lichtleiter 112 an den Befestigungspositionen 401, 402 mit den Befestigungselementen 301, 302 verklebt.

Die ersten und zweiten Positionen 401, 402, an welchen der Lichtleiter 112 an dem ersten Befestigungselement 301 bzw. an dem zweiten Befestigungselement 302 angebracht ist, weisen einen ersten Abstand 403 in einer Längserstreckung des Lichtleiters 112 auf. Ferner ist ein Zwischenträger 500 mit einer ersten Fläche 503, auf welchem die ersten und zweiten Befestigungselemente 301, 302 an jeweiligen Befestigungspositionen 501, 502 angebracht sind, und einer gegenüberliegenden zweiten Fläche 504 vorgesehen, welche an einem Messobjekt (nicht gezeigt) anbringbar ist.

Gemäß einer weiteren Ausführungsform, welche mit hierin beschriebenen Ausführungsformen kombiniert werden kann, ist die Trägerstruktur aus einem metallischen Material ausgeführt. Gemäß noch einer weiteren Ausführungsform ist der Zwischenträger 500 aus GFK oder CFK ausgeführt. Insbesondere kann eine Materialkombinationen des Materials des Zwischenträgers 500 und des Materials der Befestigungselemente 301, 302 so gewählt werden, dass eine Temperaturkompensation erreicht wird. Gemäß noch einer weiteren Ausführungsform, welche mit anderen hierin beschriebenen Ausführungsformen kombiniert werden kann, sind der erste Abstand 403, der zweite Abstand 505, ein Material der Trägerstruktur und ein Material des Zwischenträgers 500 derart gewählt, dass eine passive Temperaturkompensation für ein an der Trägerstruktur befestigtes faseroptisches Sensorelement 111 bereitgestellt wird.

Weiterhin ist es möglich, den thermischen Ausdehnungskoeffizienten der Trägerstruktur und den thermischen Ausdehnungskoeffizienten des Zwischenträgers 500 derart auszulegen bzw. aneinander anzupassen, dass die passive Temperaturkompensation für ein an der Trägerstruktur befestigtes faseroptisches Sensorpatch 110 bereitgestellt wird. Auf diese Weise der Vorteil erzielt, dass eine thermische Ausdehnung des Zwischenträgers 500 zumindest teilweise durch eine thermische Ausdehnung der Trägerstruktur kompensiert wird. Mit anderen Worten wird durch eine Ausführungsform, welche mit anderen hierin beschriebenen Ausführungsformen kombiniert werden kann, eine Temperaturkompensation bereitgestellt, welche dazu führt, dass bei einer Temperaturänderung der erste Abstand 403 im Wesentlichen konstant bleibt.

Obwohl in Figur 1A nur ein einziges Sensorelement 111 gezeigt ist, ist zu verstehen, dass die vorliegende Erfindung nicht auf eine Datenerfassung aus einem einzelnen Sensorelement 111 beschränkt ist, sondern dass entlang des Lichtleiters 112 eine Vielzahl von Sensorelementen 111 angeordnet sein können. Figur 1A zeigt es somit nur einen Abschnitt eines optischen Wellenleiters, welcher als Sensorfaser, optische Faser bzw. Lichtleiter 112 ausgebildet sein kann. Ein derartiges Sensorelement 111 ist beispielsweise empfindlich auf eine Faserdehnung bzw. eine Faserstauchung (siehe Pfeile $\Delta x$ in Figur 1A). In den Lichtleiter 112 eintretende optische Strahlung wird somit mit einem veränderten Wellenlängenverlauf aus dem Sensorelemente 111 reflektiert. Ein derartiger veränderter Wellenlängenverlauf wird bestimmt durch die mechanische Belastung des Sensorelementes 111 sowie durch Temperatureffekte.

Gemäß einer Ausführungsform, welche mit anderen hierin beschriebenen Ausführungsformen kombiniert werden kann, ist ein zweiter Abstand 505 der Befestigungspositionen 501, 502 der Befestigungselemente 301, 302 auf dem Zwischenträger 500 in einer Längsrichtung des Lichtleiters 112 größer ist als der erste Abstand 403. Auf diese Weise wird eine Wandlerstruktur bereitgestellt, welche eine hebelfreie mechanische Signalverstärkungsanordnung aufweist. Im Folgenden wird unter Bezugnahme auf Figur 1A eine derartige Signalverstärkung erläutert. Es sei angenommen, dass sich der auf einem Messobjekt angebrachte Zwischenträger 500 zusammen mit dem Messobjekt in einer durch Pfeile $\Delta x$ angezeigten Richtung dehnt. Hierbei ist die relative Längenänderung E des Zwischenträgers 500 bezogen auf den zweiten Abstand 505 bzw. L gegebenen durch die folgende Gleichung:

$$E = \Delta x \, / \, L \qquad\qquad (1)$$

Weiterhin dehnt sich das Sensorelement 111 zusammen mit dem Lichtleiter 112 zwischen der ersten Position 401 und der zweiten Position 402 mit einer relativen Längenänderung $\varepsilon$ gemäß der folgenden Gleichung:

$$\varepsilon = \Delta x \, / \, l \qquad\qquad (2)$$

Die vom Sensorelement 111 erfasste relative Dehnung $\varepsilon$ ergibt sich mit den obigen Gleichungen (1) und (2) zu:

$$\varepsilon = E \, (L/l) \qquad\qquad (3)$$

Auf diese Weise wird die auf das Messobjekt aufgebrachte relative Dehnung um den Faktor (L/l) vergrößert, so dass durch eine derartige Wandlerstruktur eine Signalverstärkung bzw. eine hebelfreie mechanische Signalverstärkungsanordnung bereitgestellt wird. Das heißt, dass die auf das Sensorelement 111 aufgebrachte relative Längenänderung $\varepsilon$ größer ist als die auf den Zwischenträger 500 aufgebrachte relative Längenänderung E. Hierdurch besteht die Möglichkeit, dass die Messauflösung erheblich verbessert wird. Es sei daraufhingewiesen, dass die oben beschriebene Signalverstärkung umgekehrt auch auf Stauchungen des Zwischenträgers 500 durch das Messobjekt anwendbar ist. Insbesondere bilden die Befestigungselemente 301, 302 zusammen mit dem Zwischenträger 500 eine über die Längen l, L einstellbare Wandlerstruktur mit einer hebelfreien mechanischen Signalverstärkungsanordnung.

Gemäß einer weiteren Ausführungsform, welche mit anderen hierin beschriebenen Ausführungsformen kombiniert werden kann, kann die Wandlerstruktur mit eingestellter hebelfreier mechanischer Signalverstärkungsanordnung derart ausgelegt werden, dass sich zusammen mit den thermischen Ausdehnungskoeffizienten der Materialien der Trägerstruktur eine passive Temperaturkompensation ergibt, insbesondere dann, wenn die Einspannvorrichtung 300 auf dem zu überwachenden Messobjekt aufgebracht wird.

Gemäß einer weiteren Ausführungsform, welche mit anderen hierin beschriebenen Ausführungsformen kombiniert werden kann, kann eine Sensorfaser bzw. der Lichtleiter 112 in Bezug auf die Längsrichtung des Lichtleiters 112 abgewinkelt zu einer Auswerteeinheit (in Figur 1A nicht gezeigt) abgeführt werden. Insbesondere kann eine einseitige Abführung des Lichtleiters 112 über ein robustes Kabel erfolgen. Um Reflexionen an dem anderen Ende des Lichtleiters 112 zu vermeiden, kann ein Terminator bereitgestellt werden, der auf einer der Abführung gegenüberliegenden Seite des Sensorelements 111 angebracht ist.

Durch die Bereitstellung des Zwischenträgers 500 mit der Möglichkeit einer großflächigen Aufbringung auf einem zu überwachenden Messobjekt wird dessen Objektdehnung über einen größeren Bereich gemittelt. Dies hat den Vorteil, dass Unstetigkeiten im Material des Messobjekts ausgeglichen werden können. Ferner ist es auf einfache Weise möglich, den Zwischenträger 500 zusammen mit dem gesamten Sensorpatch 110 auf dem Messobjekt durch Verkleben aufzubringen.

Je nach Auslegung des Zwischenträgers 500 und/oder der ersten und zweiten Befestigungselemente bei 301, 302 ergibt sich eine einstellbare Sensorhöhe 305. Gemäß einer weiteren Ausführungsform, welche mit hierin beschriebenen Ausführungsformen kombiniert werden kann, kann das Anbringen der Trägerstruktur auf dem Zwischenträger 500 und/oder das Anbringen des Zwischenträgers 500 auf dem zu überwachenden Messobjekt mittels Kleben, Löten, Bondieren oder Laserschweißen durchgeführt werden.

Figur 1B zeigt schematisch das in Figur 1A dargestellte Sensorpatch 110 mit zusätzlichem Abdeckelement 303, wobei der Verlauf der neutralen Faser 900 angegeben ist, gemäß einer Ausführungsform. Gemäß einer Ausführungsform, welche mit anderen hierin beschriebenen Ausführungsformen kombiniert werden kann, ist das Abdeckelement 303 aus einem elastischen Material ausgeführt ist, welches gewählt ist aus der Gruppe, die besteht aus Gummi, GFK, Kunststoff, CFK und jedweder Kombination.

Gemäß einer Ausführungsform, welche mit anderen hierin beschriebenen Ausführungsformen kombiniert werden kann, wird somit ein Sensorpatch 110 bereitgestellt, welches einen Lichtleiter 112 mit einem Sensorelement 111 aufweist. Ferner umfasst das Sensorpatch 110 eine Trägerstruktur mit einem ersten Befestigungselement 301 zur Befestigung des Lichtleiters 112 an einer ersten Position 401 und einem von dem ersten Befestigungselement 301 beabstandeten zweiten Befestigungselement 302 zur Befestigung des Lichtleiters 112 an einer zweiten Position 402, wobei das Sensorelement 111 zwischen der ersten Position 401 und der zweiten Position 402 angeordnet ist, einen Zwischenträger 500 mit einer ersten Fläche 503, auf welchem die ersten und zweiten Befestigungselemente 301, 302 an jeweiligen Befestigungspositionen 501, 502 angebracht sind, und einer gegenüberliegenden zweiten Fläche 504, welche an einem Messobjekt anbringbar ist, und ein auf dem Zwischenträger 500 angeordnetes und mit diesem verbundenes Abdeckelement 303. Das Abdeckelement 303 bildet zusammen mit dem Zwischenträger 500 eine etwa senkrecht zu einer Längserstreckung des Lichtleiters 112 orientierte Querschnittsdimension derart, dass der Lichtleiter 112 in der neutralen Faser 900 des Sensorpatches 110 verläuft.

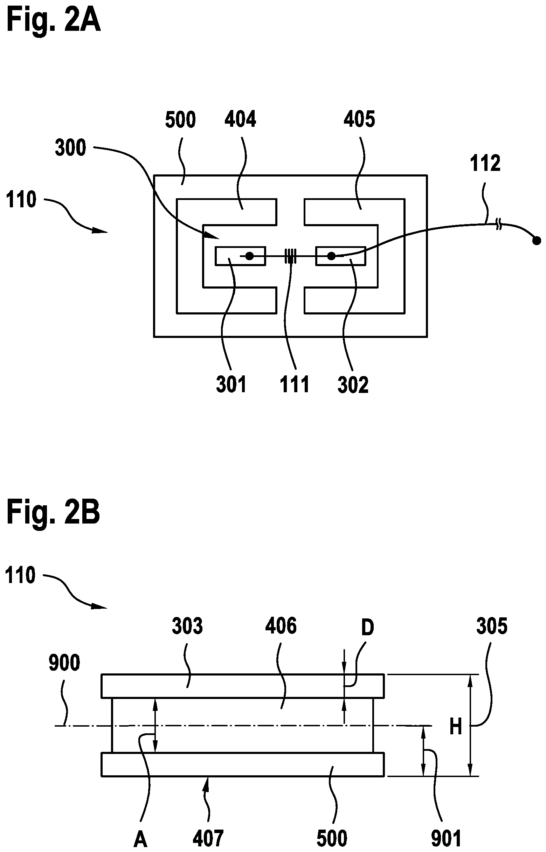

Es sei darauf hingewiesen, dass, obwohl dies in Figur 1B nicht gezeigt ist, dass Sensorpatch 110 eine kompakte Einheit bildet. Das heißt, dass der Zwischenträger 500 mechanisch fest mit dem Abdeckelement 303 und weiteren Komponenten des Sensorpatches 110 verbunden ist. In einer derartigen, kompakten Struktur kann die neutrale Faser 900 definiert werden. Bei der neutralen Faser 900 handelt es sich um diejenige Schicht eines Balkenquerschnitts, deren Länge sich bei einem Biegevorgang nicht ändert. Mit anderen Worten verursacht eine Biegung der Struktur keine Zug- oder Druckspannungen entlang der neutralen Faser 900. Somit verläuft die neutrale Faser 900 durch den geometrischen Schwerpunkt der Querschnittsfläche des Sensorpatches 110. Die Einstellung der Lage der neutralen Faser 900 innerhalb der Struktur des Sensorpatches 110 wird untenstehend unter Bezugnahme auf Figur 2B detailliert erläutert.

Wird nun beispielsweise die Achse des Lichtleiters 112 in den Bereich der neutralen Faser 900 gelegt, wie dies in Figur 1B dargestellt ist, so erzeugt eine Verbiegung des Sensorpatches 110 kein oder nur ein geringes Messsignal aus dem faseroptischen Sensorelement 111. Auf diese Weise wird der Vorteil erzielt, dass durch die Anordnung des Lichtleiters 112 zusammen mit dem faseroptischen Sensorelement 111 in der neutralen Faser 900 des gesamten Patchaufbaus eine nahezu vollständige Unempfindlichkeit gegenüber einem Verbiegen des Sensorpatches 110 beispielsweise bei einer Installation auf unebenen Messobjektoberflächen bereitgestellt wird.

Um ein Sensorpatch, wie es in Figur 1B gezeigt ist, besonders einfach beispielsweise an einem Rotorblatt einer Windkraftanlage anbringen zu können, ist es von Vorteil, wenn das Sensorpatch in einem Querschnitt senkrecht zum Lichtleiter 112 in Figur 1B eine geringe Abmessung 305 bzw. eine geringe Höhe H über dem zu überwachenden Messobjekt aufweist. Zum Beispiel kann eine maximale Abmessung 305 in einem Querschnitt senkrecht zur Achse des Lichtleiter 112 10 mm oder weniger betragen. Durch die Ausgestaltung, wie sie in Bezug auf Figur 1B dargestellt ist, kann eine solche Dimensionierung einfach realisiert werden.

Um ein wie in Figur 1B gezeigtes Sensorpatch 110 zum Messen von Dehnungen und/oder Stauchungen und/oder Temperaturen eines zu überwachenden Messobjekts zu erhalten, wird gemäß hierin beschriebenen Ausführungsformen ein entsprechendes Herstellungsverfahren bereitgestellt. Das Verfahren beinhaltet die Schritte eines Bereitstellens einer Trägerstruktur mit einem ersten und einem zweiten Befestigungselement 301, 302, eines Verlegens eines Lichtleiters 112 zwischen den ersten und zweiten Befestigungselementen 301, 302, eines Befestigens des Lichtleiters 112 an den Befestigungselementen 301, 302, eines Vorspannens des Lichtleiters 112 mittels eines zwischen den Befestigungselementen 301, 302 angeordneten elastischen Elements 506, eines Anbringens der Trägerstruktur auf einem Zwischenträger 500 und eines Abdeckens der Trägerstruktur mit einem Abdeckelement 303 derart, dass der Lichtleiter 112 in der neutralen Faser 900 des Sensorpatches 110 verläuft.

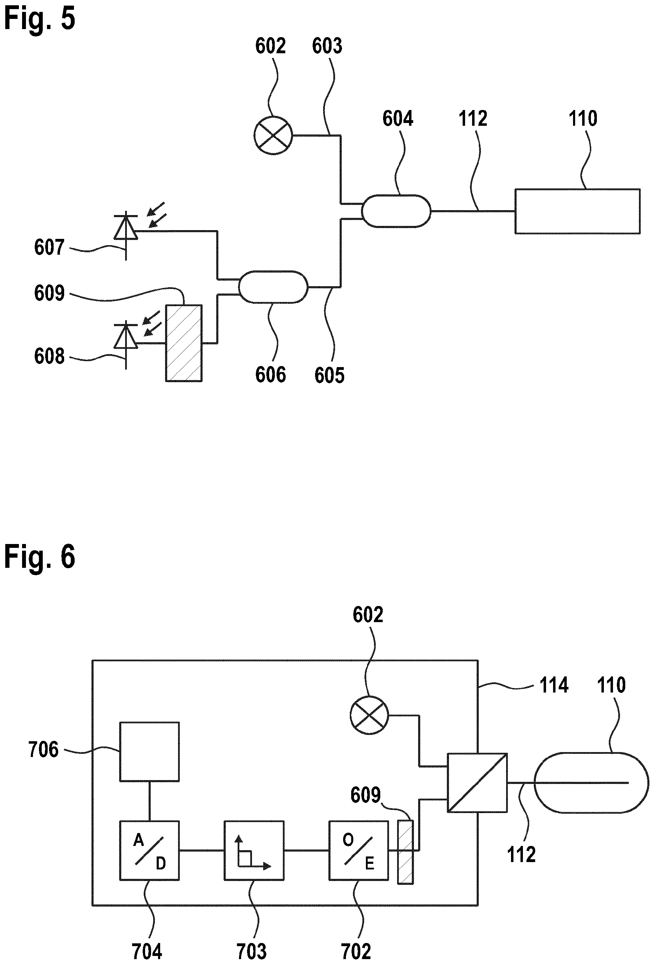

Figur 2A zeigt ein Sensorpatch 110 in einer Draufsicht ohne Abdeckelement, gemäß einer Ausführungsform. Das Sensorpatch 110 ist geeignet zum Messen von Dehnungen und/oder Stauchungen und/oder Temperaturen eines zu überwachenden Messobjekts. Das Sensorpatch 110 beinhaltet den Lichtleiter 112 mit einem Faser-Bragg-Gitter 111, wobei der Lichtleiter 112 in einer in Figur 1A dargestellten Einspannvorrichtung 300 eingespannt ist. Die in Figur 1A dargestellte Einspannvorrichtung 300 ist in einer Draufsicht gezeigt. Zumindest ein Ende des Lichtleiters 112 wird zur Messung mit einer unter Bezugnahme auf Figur 6 untenstehend beschriebenen Auswerteeinheit 114 verbunden. Es sei darauf hingewiesen, dass neben einer Auswertung des durch das Sensorelement 111 reflektierten Lichts das durch das Sensorelement 111 transmittierte Licht in der Auswerteeinheit 114 analysiert werden kann.

Ferner sind in Figur 2A zwei Verbindungselemente gezeigt, d.h. ein erstes Verbindungselement 404 und ein zweites Verbindungselement 405. Die Verbindungselemente 404, 405 dienen einer strukturellen, mechanisch festen Verbindung zwischen dem Zwischenträger 500 und dem auf die Verbindungselemente 404, 405 aufgesetzten Abdeckelement 303 (in Figur 2A nicht gezeigt). Es sei darauf hingewiesen, dass anstelle der beiden Verbindungselemente 404, 405 nur ein Verbindungselement oder mehr als zwei Verbindungselemente zur Bildung der Struktur des Sensorpatches 110 herangezogen werden können.

Gemäß einer weiteren Ausführungsform, welche mit anderen hierin beschriebenen Ausführungsformen kombiniert werden kann, kann mindestens ein Verbindungselement 404, 405, 406 einen Hohlraum aufweisen, in welchem die Trägerstruktur für den Lichtleiter 112 angeordnet ist.

Gemäß einer weiteren Ausführungsform, welche mit anderen hierin beschriebenen Ausführung von kombiniert werden kann, kann eine Verbindungsstruktur zur mechanischen Verbindung des Abdeckelements 303 mit dem Zwischenträger 500 aus zwei sich gegenüberstehenden U-Profilen gebildet sein, derart, dass ein Hohlraum bereitgestellt wird, in welchem die Trägerstruktur untergebracht werden kann, siehe Figur 2A.

Gemäß noch einer weiteren Ausführungsform, welche mit anderen hierin beschriebenen Ausführungsformen kombiniert werden kann, können der Zwischenträger 500, die Trägerstruktur für den Lichtleiter 112 und/oder mindestens ein Verbindungselement 404, 405, 406 und/oder das Abdeckelement 303 eine monolithische Einheit bilden. Auf diese Weise wird der Vorteil erzielt, dass eine kompakte Struktur für das Sensorpatch 110 bereitgestellt wird, wobei die neutrale Faser 900 innerhalb der Struktur festgelegt ist.

Figur 2B zeigt ein Sensorpatch 110 mit einem Abdeckelement 303 und einem Verbindungselement 406 in einer Seitenansicht, gemäß einer Ausführungsform. Das Sensorpatch 110 wird zur Durchführung einer Messung mit einer Verbindungsfläche 407 an einem zu überwachenden Messobjekt befestigt. Gemäß einer Ausführungsform, welche mit anderen hierin beschriebenen Ausführungsformen kombiniert werden kann, kann das Befestigen des Zwischenträgers 500 mit der Verbindungsfläche 407 auf dem zu überwachenden Messobjekt mittels Kleben, Löten, Bondieren oder Laserschweißen durchgeführt werden.

Das Verbindungselement 406 dient einer strukturellen, mechanisch festen Verbindung zwischen dem Zwischenträger 500 und dem auf das Verbindungselement 406 aufgesetzten Abdeckelement 303. Entsprechend den Materialeigenschaften und den Materialdicken der Elemente 500, 406 und 303 wird die Lage der neutralen Faser 900 in dem Sensorpatch 110 festgelegt, d.h. die Position 901 der neutralen Faser 900 bestimmt sich durch eine Auslegung der Komponenten des Sensorpatches 110. Mit anderen Worten erfolgte ein Abdecken der Trägerstruktur mit dem Abdeckelement 303 derart, dass der Lichtleiter 112 in der neutralen Faser 900 des Sensorpatches 110 verläuft.

Eine Einstellung der Lage der neutralen Faser 900 innerhalb des Sensorpatches 110 kann gemäß einer weiteren Ausführungsform, welche mit anderen hierin beschriebenen Ausführungsformen kombiniert werden kann, wie folgt bereitgestellt werden. Eine Dicke D des Abdeckelements 303 und/oder ein Abstand A des Abdeckelements 303 von dem Zwischenträger 500 und/oder die Materialeigenschaften des Abdeckelements 303 und/oder des Zwischenträgers 500 und/oder des Verbindungselements 406 können derart gewählt werden, dass der Lichtleiter 112 in der neutralen Faser des Sensorpatches 110 verläuft. Gemäß einer Ausführungsform, welche mit anderen hierin beschriebenen Ausführungsformen kombiniert werden kann, kann eine Einstellung der Lage der neutralen Faser in dem Sensorpatch durch eine Anpassung bzw. Justage einer der oben genannten Parameter, insbesondere der Dicke D erreicht werden.

Um ein Sensorpatch 110, wie es zum Beispiel in Figur 1B dargestellt ist, besonders einfach an einem Rotorblatt, insbesondere in einem äußeren radialen Bereich, zur Verfügung zu stellen, ist es von Vorteil, wenn das Sensorpatch 110 in einem Querschnitt senkrecht zum Lichtleiter 112 in Figur 1B eine geringe Abmessung 305 aufweist. Zum Beispiel kann eine maximale Abmessung 305 in einem Querschnitt senkrecht zur Achse des Lichtleiter 112 10 mm oder weniger betragen. Durch die Ausgestaltung, wie sie in Bezug auf Figur 1B dargestellt ist, kann eine solche Dimensionierung einfach realisiert werden.

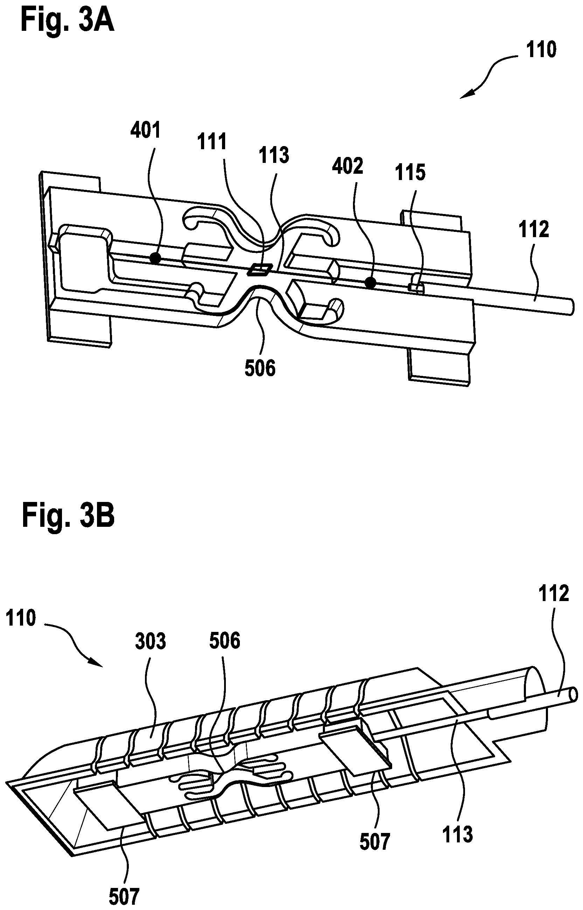

Die Figuren 3A und 3B zeigen weitere Ansichten von Teilen eines faseroptischen Sensors 110 aus unterschiedlichen Blickwinkeln, zur Verdeutlichung einer typischen Ausführungsform. Figur 3A zeigt schematisch eine Trägerstruktur für einen Lichtleiter 112 in einer perspektivischen Ansicht schräg von oben, und Figur 3B zeigt schematisch eine Trägerstruktur einen Lichtleiter 112 mit angebrachtem Abdeckelement 303 und eingelegtem Lichtleiter 112 in einer perspektivischen Ansicht schräg von unten, das heißt von der Seite, an welcher bei Sensorbetrieb das Messobjekt angebracht ist. Durch die Bereitstellung des Abdeckelements 303 wird der Vorteil erzielt, dass das faseroptische Sensorelement 111 sowie die Trägerstruktur gegen Beschädigung geschützt werden. Gemäß einer Ausführungsform ist die Trägerstruktur zwischen einem Zwischenträger (in den Figuren 3A und 3B nicht gezeigt) und dem Abdeckelement 303 zur Verfügung gestellt. Somit bietet das angebrachte Abdeckelement 303 einen Schutz vor äußeren Krafteinwirkungen, insbesondere einen Trittschutz. Gemäß einer weiteren Ausführungsform, welche mit hierin beschriebenen Ausführungsformen kombiniert werden kann, wird zum Schutz des faseroptischen Sensors 110 vor Umwelteinflüssen ferner eine Schicht aus weichem Gummi auf dem Abdeckelement 303 aufgebracht.

Der Lichtleiter 112 weist einen Lichtleiterkern 113 mit dem beispielsweise als Faser-Bragg-Gitter ausgebildeten Sensorelement 111 und einen Lichtleitermantel 115 auf. Gemäß Ausführungsformen, welche mit anderen hierin beschriebenen Ausführungsformen kombiniert werden können, weist die Trägerstruktur ferner mindestens ein zwischen den ersten und zweiten Befestigungselementen 301, 302 angeordnetes elastisches Element 506 wie etwa eine Feder auf, welches ausgelegt ist, einen an den Befestigungselementen 301, 302 bzw. den ersten und zweiten Positionen 401, 402 befestigten Lichtleiter 112 in seiner Längsrichtung vorzuspannen. Wie in Figur 3A dargestellt, kann die Trägerstruktur das elastische Element 506 beinhalten. Auf diese Weise ist es möglich, neben Faser-Dehnungen auch Faser-Stauchungen zu mittels optischer Signale zu erfassen. Mit anderen Worten wird der Vorteil erzielt, dass das elastische Element 506 ein an der Trägerstruktur angebrachtes Faser-Bragg-Gitter derart vorspannt, dass dieses sowohl Dehnungen als auch Stauchungen detektiert. Somit ist es möglich, durch die erzielte Vorspannung des Lichtleiters 112 zusammen mit dem faseroptischen Sensorelement 111 positive und negative Dehnungen zu erfassen. Weiterhin ermöglicht die Vorspannung der optischen Sensorfaser eine Erkennung eines Zustands, wenn eine Faser gerissen ist oder sich aus den Befestigungspunkten 401, 402 an einem oder beiden der Befestigungselemente 301, 302 gelöst hat. In vorteilhafter Weise ermöglicht eine derartige Vorspannung des Lichtleiters 122 demnach sowohl ein Erfassen einer Stauchung als auch ein Erfassen eines Ablösens des Lichtleiters 112 von einem Befestigungselement 301, 302.

Gemäß weiteren Ausführungsformen, welche mit hierin beschriebenen Ausführungsformen kombiniert werden können, kann die Trägerstruktur zusammen mit dem elastischen Element 506 einstückig ausgeführt werden.

Wie in Figur 3B dargestellt, weist die Trägerstruktur Flächen 507, d.h. Verbindungsflächen zum Zwischenträger 500 auf, die an dem Zwischenträger 500 befestigt werden können. Eine derartige Befestigung kann beispielsweise eine Klebeverbindung oder eine Lötverbindung sein. Die Flächen 507 stimmen mit den in den Figuren 1A und 1B gezeigten ersten und zweiten Befestigungspositionen 501, 502 überein.

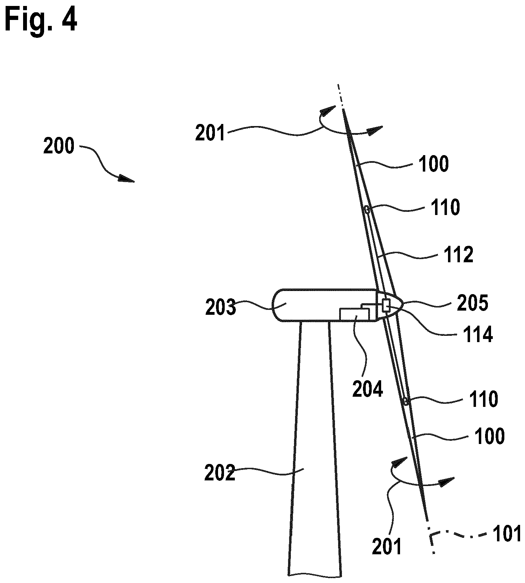

Figur 4 zeigt eine Windkraftanlage 200. Die Windkraftanlage 200 beinhaltet einen Turm 202 und eine Gondel 203. An der Gondel 203 ist der Rotor 500 befestigt. Der Rotor 500 beinhaltet eine Nabe 205, an der die Rotorblätter 100 befestigt sind. Gemäß typischen Ausführungsformen hat der Rotor 500 zumindest zwei Rotorblätter, insbesondere drei Rotorblätter. Beim Betrieb der Windenergieanlage bzw. der Windkraftanlage rotiert der Rotor 500, d.h. die Nabe 205 mit den Rotorblättern 100 um eine Achse. Dabei wird ein Generator zur Stromerzeugung angetrieben. Um ein Sensorpatch 110 beispielsweise in einer Windkraftanlage einzusetzen, kann das Sensorpatch 110, wie es zum Beispiel in den Figuren 3A und 3B dargestellt ist, an einem Rotorblatt 100, insbesondere in einem äußeren radialen Bereich, zur Verfügung gestellt werden. Hierbei ist es von Vorteil, wenn das Sensorpatch 110 in einem Querschnitt senkrecht zum Lichtleiter 112 in Figur 1 eine geringe Abmessung aufweist. Zum Beispiel kann eine maximale Abmessung in einem Querschnitt senkrecht zur Achse des Lichtleiter 112 10 mm oder weniger betragen. Durch die Ausgestaltung, wie sie in Bezug auf Figur 1B dargestellt ist, kann eine solche Dimensionierung einfach realisiert werden.

Wie in Figur 4 dargestellt, ist zumindest ein Sesnorpatch 110 an einem Rotorblatt 100 zur Verfügung gestellt. Das Sensorpatch 110 ist über eine Signalleitung bzw. einen Lichtleiter 112 mit einer Auswerteeinheit 114 verbunden. Die Auswerteeinheit 114 liefert z.B. ein Signal an eine Steuerungseinheit 204 der Windkraftanlage 200.

Hierbei ist es beispielsweise für den Einsatz in Rotorblättern von Windkraftanlagen bzw. für die Verfahren zur Überwachung von Windkraftanlagen besonders günstig, dass eine Dehnung und/oder einen Stauchung in einer Richtung senkrecht zur Längserstreckung des Lichtleiters 112 gemessen wird. Windenergieanlagen unterliegen einer komplexen Steuerung, die zum Beispiel durch wechselnde Betriebsbedingungen notwendig sein kann. Bei der Überwachung von Betriebszuständen von Windenergieanlagen wird eine Mehrzahl von Sensoren verwendet. Zum Beispiel können Dehnungs- bzw. Stauchungsmessungen an einem Rotorblatt 100 zur Messung der Biegung des Rotorblatts 100 durchgeführt werden.

Durch die mit dem Betrieb einer Windkraftanlage verknüpften Bedingungen, zum Beispiel Druck- und Temperaturschwankungen, Witterung und Wetterverhältnisse, aber auch insbesondere stark wechselnde Windverhältnisse, sowie durch die Vielzahl von gesetzlich vorgeschriebenen Sicherheitsmaßnahmen sind die Überwachung und die für die Überwachung notwendigen Sensoren einer Vielzahl von Randbedingungen unterworfen. Zum Beispiel kann im Betrieb eine Druckvariation an den Rotorblättern 100 auftreten. Hierbei kann eine Instabilität entlang der Rotorblattachse 101 auftreten, welche den Betrieb der Windkraftanlage stört und die Energieausbeute verringert. Ferner besteht die Möglichkeit, dass es in einzelnen Rotorblättern zu einer Druckänderung und damit zu Vibrationen bzw. Oszillationen kommt. Dies führt in vielen Fällen zu kritischen Betriebszuständen, welche aufwändige Steuerungs- und/oder Regelungs-Maßnahmen erfordern. Ferner kann durch eine Dehnungs- bzw. Stauchungsmessung direkt am Rotorblatt eine für eine Energieausbeute effiziente Einstellung eines Pitch-Winkels aufgefunden werden.

Jedes Rotorblatt 100 kann separat eine individuelle Dehnungs- bzw. Stauchungsverteilung aufweisen. Daher wird gemäß manchen Ausführungsformen, die mit anderen Ausführungsformen kombiniert werden können, mindestens ein faseroptischer Sensor 110 in jedem Rotorblatt 100 zur Verfügung gestellt.

Gemäß einigen der hier beschriebenen Ausführungsformen, die mit anderen Ausführungsformen kombiniert werden können, ermöglichen faseroptische Sensoren 110, bei welchen ein Signal optisch über einen Lichtleiter 112 übertragen wird, eine bisher in der Praxis als ungünstig angesehene radiale Montageposition entlang einer Längserstreckung des Rotorblatts 100, da die Übertragung mittels eines Lichtleiters 112 bzw. einer optischen Faser ein reduziertes Risiko eines Blitzschadens mit sich bringt. Daher können faseroptische Sensoren 110 derart zur Verfügung gestellt werden, dass sie eine Montage in einem radial äußeren Bereich 107 eines Rotorblatts 110 erlauben, ohne das Risiko eines Blitzschadens zu erhöhen.

Figur 5 zeigt ein typisches Messsystem zur faseroptischen Dehnungs- bzw. Stauchungsmessung gemäß den hierin beschriebenen Ausführungsformen. Das System enthält einen oder mehrere faseroptische Sensoren 110. Das System weist eine Quelle 602 für elektromagnetische Strahlung, zum Beispiel eine Primärlichtquelle, auf. Die Quelle 602 dient zur Bereitstellung von optischer Strahlung, mit welcher mindestens ein faseroptischer Sensor 110 bestrahlt werden kann. Zu diesem Zweck ist eine optische Übertragungsfaser bzw. ein Lichtleiter 603 zwischen der Primärlichtquelle 602 und einem ersten Faserkoppler 604 bereitgestellt. Der Faserkoppler 604 koppelt das Primärlicht in die optische Faser bzw. den Lichtleiter 112 ein. Die Quelle 602 kann zum Beispiel eine Breitbandlichtquelle, einen Laser, eine LED (light emitting diode), eine SLD (Superlumineszenzdiode), eine ASE-Lichtquelle (Amplified Spontaneous Emission-Lichtquelle) oder ein SOA (Semiconductor Optical Amplifier) sein. Es können für hier beschriebene Ausführungsformen auch mehrere Quellen gleichen oder unterschiedlichen Typs (s.o.) verwendet werden.

Das Sensorelement 111, wie zum Beispiel ein optisches Faser-Bragg-Gitter, ist an die Sensorfaser 112 optisch angekoppelt. Das von den faseroptischen Sensoren 110 zurückgeworfene Licht wird wiederum über den Faserkoppler 604 geleitet, welcher das Licht über die Übertragungsfaser 605 in einen Strahlteiler 606 leitet. Der Strahlteiler 606 teilt das zurückgeworfene Licht auf zur Detektion mittels eines ersten Detektors 607 und eines zweiten Detektors 608. Hierbei wird das auf dem zweiten Detektor 608 detektierte Signal zunächst mit einer optischen Filtereinrichtung 609 gefiltert. Durch die Filtereinrichtung 609 kann eine Wellenlängenverteilung eines aus dem Sensorelement 111 ausgegebenen optischen Signals analysiert werden.

Im Allgemeinen kann ein Messsystem, wie es in Figur 5 dargestellt ist, ohne den Strahlteiler 606 bzw. den Detektor 607 zur Verfügung gestellt sein. Der Detektor 607 ermöglicht jedoch eine Normierung des Messsignals des faseroptischen Sensors 110 in Bezug auf anderweitige Intensitätsfluktuationen, wie zum Beispiel Schwankungen der Intensität der Quelle 602, Schwankungen durch Reflexionen an Schnittstellen zwischen einzelnen Lichtleitern, Schwankungen durch Reflexionen an Schnittstellen zwischen dem Lichtleiter 112 und Auswerteeinheit 114 oder andere Intensitätsschwankungen. Diese Normierung verbessert die Messgenauigkeit und reduziert beim Betrieb des Messsystems eine Abhängigkeit von der Länge der zwischen der Auswerteeinheit 114 und dem faseroptischen Sensor 110 zur Verfügung gestellten Lichtleiter 112.

Die optische Filtereinrichtung 609 bzw. zusätzliche optische Filtereinrichtungen zur Filterung des aus dem Sensorelement 111 ausgegebenen optische Reflexionssignals können einen optischen Filter umfassen, der gewählt ist aus der Gruppe, welche besteht aus einem Kantenfilter, einem Dünnschichtfilter, einem Faser-Bragg-Gitter, einem LPG, einem Arrayed-Waveguide-Grating (AWG), einem Echelle-Gitter, einer Gitteranordnung, einem Prisma, einem Interferometer, und jedweder Kombination davon.

Figur 6 zeigt eine Auswerteeinheit 114, wobei ein Signal eines faseroptischen Sensors 110 über einen Lichtleiter 112 zur Auswerteeinheit 114 geführt wird. In Figur 6 ist weiterhin eine Lichtquelle 602 dargestellt, die optional in der Auswerteeinheit zur Verfügung gestellt werden kann. Die Lichtquelle 602 kann aber auch unabhängig bzw. außerhalb von der Auswerteeinheit 114 zur Verfügung gestellt sein. Das optische Signal des faseroptischen Sensors 110 wird mit einem Detektor, d.h. mit einem opto-elektrischen Wandler 702 in ein elektrisches Signal gewandelt. Das elektrische Signal wird mit einem analogen Anti-Aliasing-Filter 703 gefiltert. Im Anschluss an die analoge Filterung mit dem analogen Anti-Aliasing-Filter bzw. Tiefpassfilter 703 wird das Signal durch einen Analog-Digital-Wandler 704 digitalisiert.

Gemäß einigen hier beschriebenen Ausführungsformen, die mit anderen Ausführungsformen kombiniert werden können, ermöglicht es die Auswerteeinheit 114, Dehnungen und/oder Stauchungen eines Messobjekts, auf welchem der Zwischenträger 500 der Einspannvorrichtung 300 angebracht ist, auf Grundlage des aus dem faseroptischen Sensorelement 111 ausgegebenen Reflexionssignals zu ermitteln. Der Anti-Aliasing-Filter kann eine Grenzfrequenz von 1 kHz oder kleiner insbesondere von 500 Hz oder kleiner, weiterhin insbesondere von 100 Hz oder kleiner aufweisen. Gemäß hier beschriebenen Ausführungsformen findet eine solche Filterung vor der Digitalisierung statt. Gemäß hier beschriebenen Ausführungsformen findet eine analoge Tiefpassfilterung vor einer Digitalisierung eines Signals eines faseroptischen Sensors 110 statt. Gemäß hier beschriebenen Ausführungsformen, die mit anderen Ausführungsformen kombiniert werden können, kann der Tiefpassfilter auch als ein analoger anti-aliasing Filter bezeichnet werden. Hierbei wird im Rahmen eines Abtasttheorems die Nyquist-Frequenz berücksichtigt, und eine Tiefpassfilterung mit Signalanteilen kleiner der Nyquist-Frequenz mittels des analogen Tiefpass-Filters bzw. analogen anti-aliasing Filters zur Verfügung gestellt. Durch die hier beschriebenen Ausführungsformen mit einem faseroptischen Sensor 110 und einer analogen Tiefpassfilterung kann eine verbesserte Messung von Dehnungen und/oder Stauchungen eines Messobjekts zur Verfügung gestellt werden. Figur 6 zeigt ferner eine digitale Auswerteeinheit 706, die zum Beispiel eine CPU, Speicher und andere Elemente zur digitalen Datenverarbeitung beinhalten kann.

Wie in Bezug auf Figur 6 erläutert, kann ein Verfahren zur Dehnungs- bzw. Stauchungserfassung mittels des faseroptischen Sensors 110 verbessert werden. Zum Beispiel ist eine Auswerteeinheit 114 zur Verfügung gestellt. Die Auswerteeinheit 114 kann einen Wandler zum Wandeln des optischen Signals in ein elektrisches Signal beinhalten. Zum Beispiel kann eine Fotodiode, ein Photomultiplier (PM) oder ein anderer optoelektronischer Detektor als Wandler verwendet werden. Die Auswerteeinheit 114 beinhaltet ferner einen Anti-Aliasing-Filter 703, der zum Beispiel mit dem Ausgang des Wandlers bzw. des opto-elektronischen Detektors verbunden ist. Die Auswerteeinheit 114 kann ferner einen Analog-digital-Wandler 704 beinhalten, der mit dem Ausgang des Anti-Aliasing-Filters 703 verbunden ist. Die Auswerteeinheit 114 kann darüber hinaus eine digitale Auswerteeinheit 706 beinhalten, die zur Auswertung der digitalisierten Signale eingerichtet ist.

Gemäß noch weiteren Ausführungsformen, die mit hier beschriebenen Ausführungsformen kombiniert werden können, kann eine Temperaturkompensation in dem faseroptischen Sensor 110 derart bereitgestellt werden, dass für den Zwischenträger 500 und/oder die Befestigungselemente 301, 302 Materialien mit einem sehr geringen thermischen Ausdehnungskoeffizienten verwendet werden.

Gemäß Ausführungsformen kann der Lichtleiter 112 zum Beispiel eine Glasfaser, eine optische Faser oder ein Polymerleiter sein, wobei Materialien wie optische Polymere, Polymethylmethacrylat, Polycarbonat, Quarzglas, Ethylen-Tetrafluorethylen verwendet werden können, die gegebenenfalls dotiert sind. Insbesondere kann die optische Faser als eine SMF-28 Faser ausgebildet sein.

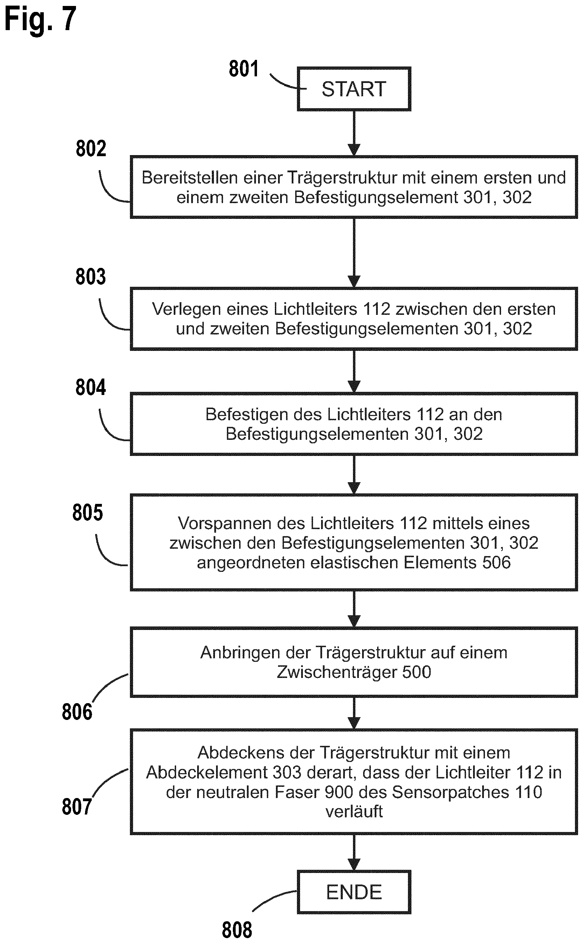

Figur 7 zeigt ein Ablaufdiagramm zur Veranschaulichung eines Verfahrens zum Herstellen eines Sensorpatches 110 gemäß hier beschriebenen Ausführungsformen. Im Einzelnen beinhaltet das Verfahren zum Herstellen des Sensorpatches 110 die folgenden Blöcke 801 bis 808. Die Herstellungsprozedur wird in einem Block 801 gestartet. Anschließend erfolgt in einem Block 802 ein Bereitstellen einer Trägerstruktur mit einem ersten und einem zweiten Befestigungselement 301, 302. In einem darauf folgenden Block 803 wird ein Lichtleiter 112 zwischen den ersten und zweiten Befestigungselementen 301, 302 verlegt, indem er beispielsweise in dafür vorgesehene Nuten an den Befestigungselementen 301,302 eingelegt wird. Schließlich erfolgte ein Befestigen des Lichtleiters 112 an den Befestigungselementen 301, 302 (Block 804). Ein derartiges Befestigen des Lichtleiters 112 an den Befestigungselementen 301, 302 kann ein Verkleben des Lichtleiters 112 mit den Befestigungselementen 301, 302 beinhalten.

Der Lichtleiter 112 kann nun mittels eines zwischen den Befestigungselementen 301, 302 angeordneten elastischen Elements 506 vorgespannt werden, siehe Block 805. Schließlich erfolgt ein Anbringen der Trägerstruktur auf einem Zwischenträger 500 in einem Block 806. um die vollständige Sensor Patch-Struktur herzustellen, wird in einem Block 807 die Trägerstruktur mit einem Abdeckelement 303 derart abgedeckt, dass der Lichtleiter 112 in der neutralen Faser 900 des Sensorpatches 110 verläuft. Es sei jedoch hingewiesen, dass der Schritt eines Abdeckens der Trägerstruktur mit einem Abdeckelement 303 derart, dass der Lichtleiter 112 in der neutralen Faser 900 des Sensorpatches 110 verläuft, darauf beruht, dass eine mechanische feste Verbindung zwischen dem Zwischenträger 500 und dem Abdeckelement 303 über beispielsweise eines oder mehrerer Verbindungselemente 404, 405, 406 bereitgestellt wird. Schließlich wird die Herstellungsprozedur in dem Block 808 beendet.

Gemäß einer Ausführungsformen, welche mit anderen hierin beschriebenen Ausführungsformen kombiniert werden kann, können die Trägerstruktur, der Zwischenträger 500 und das Abdeckelement 303 zusammen mit dem Lichtleiter 112 als eine Einheit verklebt werden.

Somit wird ein faseroptischer Sensor 110 zum Messen von Dehnungen und/oder Stauchungen eines zu überwachenden Messobjekts bereitgestellt. Der Sensor 110 beinhaltet einen Lichtleiter 112 mit einem Faser-Bragg-Gitter 111, wobei der Lichtleiter 112 in einer Einspannvorrichtung 300 eingespannt ist. Die Einspannvorrichtung 300 wiederum beinhaltet eine Trägerstruktur, welche ein erstes Befestigungselement 301 zur Befestigung des Lichtleiters 112 an einer ersten Position 401 und ein von dem ersten Befestigungselement 301 beabstandetes zweites Befestigungselement 302 zur Befestigung des Lichtleiters 112 an einer zweiten Position 401 aufweist, wobei die ersten und zweiten Positionen 401, 402 einen ersten Abstand 403 in einer Längserstreckung des Lichtleiters 112 aufweisen. Ferner ist ein Zwischenträger 500 mit einer ersten Fläche 503, auf welchem die ersten und zweiten Befestigungselemente 301, 302 an jeweiligen Befestigungspositionen 501, 502 angebracht sind, und einer gegenüberliegenden zweiten Fläche 504 bereitgestellt, welche an einem Messobjekt anbringbar ist. Hierbei ist ein zweiter Abstand 505 der Befestigungspositionen 501, 502 der Befestigungselemente 301, 302 auf dem Zwischenträger 500 in einer Längsrichtung des Lichtleiters 112 größer ist als der erste Abstand 403.

Weitere Anwendungen des faseroptischen Sensors 110 bestehen auf dem Gebiet der Vibrationsmessung. Durch die Detektion von Dehnungen und Stauchungen werden beispielsweise Luftschall- oder Köperschall-Vibrationen erfassbar. Derartige, mit dem faseroptischen Sensor 110 gemäß hierin beschriebenen Ausführungsformen erfassbare Vibrationen können Frequenzen in einem Bereich von 1 kHz oder höher, in typischer Weise in einem Bereich von 5 kHz oder höher aufweisen.

Obwohl die vorliegende Erfindung vorstehend anhand typischer Ausführungsbeispiele beschrieben wurde, ist sie darauf nicht beschränkt, sondern auf vielfältige Weise modifizierbar. Auch ist die Erfindung nicht auf die genannten Anwendungsmöglichkeiten beschränkt.

## Patentansprüche

1.  Sensorpatch (110), umfassend:

    einen Lichtleiter (112), welcher mindestens ein faseroptisches Sensorelement (111) aufweist;
    eine Trägerstruktur, welche aufweist:

    ein erstes Befestigungselement (301) zur Befestigung des Lichtleiters (112) an einer ersten Position (401); und
    ein von dem ersten Befestigungselement (301) beabstandetes zweites Befestigungselement (302) zur Befestigung des Lichtleiters (112) an einer zweiten Position (402), wobei das faseroptische Sensorelement (111) zwischen der ersten Position (401) und der zweiten Position (402) angeordnet ist;

    einen Zwischenträger (500) mit einer ersten Fläche (503), auf welchem die ersten und zweiten Befestigungselemente (301, 302) an jeweiligen Befestigungspositionen (501, 502) angebracht sind, und einer gegenüberliegenden zweiten Fläche (504), welche an einem Messobjekt anbringbar ist; und
    ein auf dem Zwischenträger (500) angeordnetes und mit diesem verbundenes Abdeckelement (303), welches zusammen mit dem Zwischenträger (500) eine etwa senkrecht zu einer Längserstreckung des Lichtleiters (112) orientierte Querschnittsdimension derart aufweist, dass der Lichtleiter (112) in der bei Biegung keine Zug- und Druckspannungen aufweisenden neutralen Faser (900) des Sensorpatches (110) verläuft.

2.  Sensorpatch (110) nach Anspruch 1, ferner umfassend mindestens ein Verbindungselement (404, 405) zur mechanischen Verbindung des Abdeckelements (303) mit dem Zwischenträger (500).

3.  Sensorpatch (110) nach Anspruch 1 oder 2, wobei das Verbindungselement (404, 405) einen Hohlraum aufweist, in welchem die Trägerstruktur angeordnet ist.

4.  Sensorpatch (110) nach einem der Ansprüche 1 bis 3, wobei der Zwischenträger (500), die Trägerstruktur, das Verbindungselement (404, 405) und das Abdeckelement (303) eine monolithische Einheit bilden.

5.  Sensorpatch (110) nach einem der Ansprüche 1 bis 4, wobei eine Dicke (D) des Abdeckelements (303) und/oder ein Abstand (A) des Abdeckelements (303) von dem Zwischenträger (500) und/oder die Materialeigenschaften des Abdeckelements (303) und/oder des Zwischenträgers (500) und/oder des Verbindungselements (404, 405) derart gewählt sind, dass der Lichtleiter (112) in der neutralen Faser (900) des Sensorpatches (110) verläuft.

6.  Sensorpatch (110) nach einem der Ansprüche 1 bis 5, wobei die ersten und zweiten Positionen (401, 402) einen ersten Abstand (403) in einer Längserstreckung des Lichtleiters (112) aufweisen, wobei ein zweiter Abstand (505) der Befestigungspositionen (501, 502) der Befestigungselemente (301, 302) auf dem Zwischenträger (500) in einer Längsrichtung des Lichtleiters (112) größer ist als der erste Abstand (403).

7.  Sensorpatch (110) nach einem der Ansprüche 1 bis 6, wobei die ersten und/oder zweiten Abstände (403, 505) und/oder die thermischen Ausdehnungskoeffizienten der Trägerstruktur und des Zwischenträgers (500) derart ausgelegt sind, dass eine passive Temperaturkompensation des an der Trägerstruktur befestigten faseroptischen Sensorelements (111) bereitgestellt wird.

8. Sensorpatch (110) nach einem der Ansprüche 1 bis 7, wobei das Abdeckelement (303) aus einem elastischen Material ausgeführt ist, welches gewählt ist aus der Gruppe, die besteht aus Gummi, GFK, Kunststoff, CFK und jedweder Kombination davon.

9. Sensorpatch (110) nach einem der Ansprüche 1 bis 8, wobei das mindestens eine faseroptische Sensorelement (111) als ein Faser-Bragg-Gitter ausgebildet ist.

10. Sensorpatch (110) nach einem der Ansprüche 1 bis 9, wobei der Lichtleiter (112) in eine Aussparung des Befestigungselements (301, 302) eingeklebt ist.

11. Sensorpatch (110) nach einem der Ansprüche 1 bis 10, wobei die Trägerstruktur ferner mindestens ein zwischen den ersten und zweiten Befestigungselementen (301, 302) angeordnetes elastisches Element (506) umfasst, welches ausgelegt ist, einen an den Befestigungselementen (301, 302) befestigten Lichtleiter (112) in Längsrichtung vorzuspannen.

12. Sensorpatch (110) nach einem der Ansprüche 6 bis 11, wobei die Befestigungselemente (301, 302) zusammen mit dem Zwischenträger (500) eine Wandlerstruktur mit einer hebelfreien mechanischen Signalverstärkungsanordnung ausbilden, welche derart ausgelegt ist, dass eine auf das Sensorelement (111) aufgebrachte relative Längenänderung des ersten Abstands (403) größer ist als eine auf den Zwischenträger (500) aufgebrachte relative Längenänderung des zweiten Abstands (505).

13. Sensorpatch (110) nach einem der Ansprüche 1 bis 12, wobei die Trägerstruktur einstückig ausgeführt ist, und/oder wobei die Trägerstruktur ein Material enthält, welches gewählt ist aus der Gruppe, die besteht aus GFK, Stahl, Aluminium einer Legierung, CFK und jedweder Kombination davon.

14. Verfahren zum Herstellen eines Sensorpatches (110), umfassend:

Bereitstellen einer Trägerstruktur mit einem ersten und einem zweiten Befestigungselement (301, 302);
Verlegen eines Lichtleiters (112) zwischen den ersten und zweiten Befestigungselementen (301, 302);
Befestigen des Lichtleiters an den Befestigungselementen (301, 302);
Vorspannen des Lichtleiters (112) mittels eines zwischen den Befestigungselementen (301, 302) angeordneten elastischen Elements (506);
Anbringen der Trägerstruktur auf einem Zwischenträger (500); und
Abdecken der Trägerstruktur mit einem Abdeckelement (303) derart, dass der Lichtleiter (112) in der neutralen Faser (900) des Sensorpatches (110) verläuft.

15. Verfahren nach Anspruch 14, wobei der Lichtleiter (112) mit den Befestigungselementen (301, 302) verklebt wird, und/oder wobei eine thermische Ausdehnung des Zwischenträgers (500) zumindest teilweise durch eine thermische Ausdehnung der Trägerstruktur kompensiert wird, und/oder wobei die Trägerstruktur, der Zwischenträger (500) und das Abdeckelement (303) zusammen mit dem Lichtleiter (112) als eine Einheit verklebt werden.

**Claims**

1. A sensor patch (110), comprising:

a light conductor (112) including at least one fiber optic sensor element (111);
a carrier structure, including:

a first fastening element (301) for fastening the light conductor (112) at a first position (401); and spaced apart from the first fastening element (301), a second fastening element (302) for fastening the light conductor (112) at a second position (402), wherein the fiber optic sensor element (111) is arranged between the first position (401) and the second position (402);

an intermediate carrier (500) having a first surface (503), on which intermediate carrier the first and second fastening elements (301, 302) are attached at respective fastening positions (501, 502), and having an opposite second surface (504) which can be attached to a measurement object; and
a cover element (303) which is arranged on and connected to the intermediate carrier (500) and, together with the intermediate carrier (500), has a cross-sectional dimension oriented approximately vertically to a longitudinal extension of the light conductor (112) such that the light conductor (112) is running in the neutral fiber (900) of the sensor patch (110), which fiber has no tensile or compressive stresses in the event of bending.

2. The sensor patch (110) according to claim 1, further comprising at least one connecting element (404, 405) for mechanically connecting the cover element (303) to the intermediate carrier (500).

3. The sensor patch (110) according to claim 1 or 2, wherein the connecting element (404, 405) has a cavity in which the carrier structure is arranged.

4. The sensor patch (110) according to any one of claims 1 to 3, wherein the intermediate carrier (500), the carrier structure, the connecting element (404, 405), and the cover element (303) form a monolithic unit.

5. The sensor patch (110) according to any one of claims 1 to 4, wherein a thickness (D) of the cover element (303) and/or a distance (A) of the cover element (303) from the intermediate carrier (500) and/or the material properties of the cover element (303) and/or of the intermediate carrier (500) and/or of the connecting element (404, 405) are selected such that the light conductor (112) runs in the neutral fiber (900) of the sensor patch (110).

6. The sensor patch (110) according to any one of claims 1 to 5, wherein the first and second positions (401, 402) have a first distance (403) in the longitudinal extension of the light conductor (112), wherein a second distance (505) of the fastening positions (501, 502) of the fastening elements (301, 302) on the intermediate carrier (500) is larger in the longitudinal direction of the light conductor (112) than the first distance (403).

7. The sensor patch (110) according to any one of claims 1 to 6, wherein the first and/or second distances (403, 505) and/or the thermal expansion coefficients of the carrier structure and of the intermediate carrier (500) are configured such that a passive temperature compensation of the fiber optic sensor element (111) fastened to the carrier structure is provided.

8. The sensor patch (110) according to any one of claims 1 to 7, wherein the cover element (303) is made of an elastic material selected from the group consisting of rubber, GFK, plastics, CFK and any combination thereof.

9. The sensor patch (110) according to any one of claims 1 to 8, wherein the at least one fiber optic sensor element (111) is formed as a fiber Bragg grating.

10. The sensor patch (110) according to any one of claims 1 to 9, wherein the light conductor (112) is glued into a recess of the fastening element (301, 302).

11. The sensor patch (110) according to any one of claims 1 to 10, wherein the carrier structure further comprises at least one elastic element (506) arranged between the first and second fastening elements (301, 302), which is configured to pre-tension a light conductor (112) in the longitudinal direction, which is fastened to the fastening elements (301, 302).

12. The sensor patch (110) according to any one of claims 6 to 11, wherein the fastening elements (301, 302) together with the intermediate carrier (500) form a converter structure having a lever-free mechanical signal amplification arrangement, which is configured such that a relative change of length of the first distance (403) applied to the sensor element (111) is larger than a relative change of length of the second distance (505) applied to the intermediate carrier (500).

13. The sensor patch (110) according to any one of claims 1 to 12, wherein the carrier structure is realized to be one-piece, and/or wherein the carrier structure contains a material selected from the group consisting of GFK, steel, aluminum of an alloy, CFK and any combination thereof.

14. A method for producing a sensor patch (110), comprising:

  providing a carrier structure having a first and a second fastening element (301, 302);
  laying a light conductor (112) between the first and second fastening elements (301, 302);

fastening the light conductor to the fastening elements (301, 302);
pre-tensioning the light conductor (112) by means of an elastic element (506) arranged between the fastening elements (301, 302);
attaching the carrier structure to an intermediate carrier (500); and
covering the carrier structure with a cover element (303) in such a way that the light conductor (112) runs in the neutral fiber (900) of the sensor patch (110).

15. The method according to claim 14, wherein the light conductor (112) is glued together with the fastening elements (301, 302), and/or wherein a thermal expansion of the intermediate carrier (500) is compensated at least in part by a thermal expansion of the carrier structure, and/or wherein the carrier structure, the intermediate carrier (500) and the cover element (303) are glued together as a unit along with the light conductor (112).

**Revendications**

1. Patch de détection (110), comprenant :

   un conducteur optique (112), qui présente au moins un élément de détection à fibres optiques (111) ;
   une structure de support, qui présente :

   un premier élément de fixation (301) destiné à fixer le conducteur optique (112) dans une première position (401) ; et
   un deuxième élément de fixation (302) distant du premier élément de fixation (301), destiné à fixer le conducteur optique (112) dans une deuxième position (402), sachant que l'élément de détection à fibres optiques (111) est disposé entre la première position (401) et la deuxième position (402) ;

   un support intermédiaire (500) présentant une première surface (503), sur lequel le premier et le deuxième élément de fixation (301, 302) sont apposés dans des positions de fixation (501, 502) respectives, et une deuxième face (504) opposée qui peut être placée au niveau d'un objet de mesure ; et
   un élément de recouvrement (303) disposé sur le support intermédiaire (500) et relié à celui-ci, qui présente, conjointement avec le support intermédiaire (500), une dimension de section transversale orientée de manière sensiblement perpendiculaire à une extension longitudinale du conducteur optique (112) de telle sorte que le conducteur optique (112) passe dans la fibre neutre (900) du patch de détection (110) qui ne présente pas de contraintes de traction et de compression en torsion.

2. Patch de détection (110) selon la revendication 1, comprenant en outre au moins un élément de liaison (404, 405) pour la liaison mécanique de l'élément de recouvrement (303) avec le support intermédiaire (500).

3. Patch de détection (110) selon la revendication 1 ou 2, sachant que l'élément de liaison (404, 405) présente un espace creux dans lequel la structure de support est disposée.

4. Patch de détection (110) selon l'une des revendications 1 à 3, sachant que le support intermédiaire (500), la structure de support, l'élément de liaison (404, 405) et l'élément de recouvrement (303) forment une unité monolithique.

5. Patch de détection (110) selon l'une des revendications 1 à 4, sachant qu'une épaisseur (D) de l'élément de recouvrement (303) et/ou un écartement (A) de l'élément de recouvrement (303) par rapport au support intermédiaire (500) et/ou les propriétés de matériau de l'élément de recouvrement (303) et/ou du support intermédiaire (500) et/ou de l'élément de liaison (404, 405) sont choisis de telle sorte que le conducteur optique (112) passe dans la fibre neutre (900) du patch de détection (110).

6. Patch de détection (110) selon l'une des revendications 1 à 5, sachant que la première et la deuxième position (401, 402) présentent un premier écartement (403) dans une extension longitudinale du conducteur optique (112), sachant qu'un deuxième écartement (505) des positions de fixation (501, 502) des éléments de fixation (301, 302) sur le support intermédiaire (500) dans une extension longitudinale du conducteur optique (112) est plus grand que le premier écartement (403).

7. Patch de détection (110) selon l'une des revendications 1 à 6, sachant que le premier et/ou le deuxième écartement (403, 505) et/ou les coefficients de dilatation thermique de la structure de support et du support intermédiaire (500) sont conçus de telle sorte qu'une compensation de température passive de l'élément de détection à fibres optiques (111) fixé à la structure de support soit donnée.

8. Patch de détection (110) selon l'une des revendications 1 à 7, sachant que l'élément de recouvrement (303) est réalisé à partir d'un matériau élastique qui est choisi dans le groupe constitué par le caoutchouc, le plastique renforcé à la fibre de verre, le plastique, le plastique renforcé à la fibre de carbone et toute combinaison de ceux-ci.

9. Patch de détection (110) selon l'une des revendications 1 à 8, sachant que l'au moins un élément de détection à fibres optiques (111) est constitué comme réseau de Bragg.

10. Patch de détection (110) selon l'une des revendications 1 à 9, sachant que le conducteur optique (112) est collé dans un évidement de l'élément de fixation (301, 302).

11. Patch de détection (110) selon l'une des revendications 1 à 10, sachant que la structure de support comprend en outre au moins un élément élastique (506) disposé entre le premier et le deuxième élément de fixation (301, 302), qui est conçu pour précontraindre en direction longitudinale un conducteur optique (112) fixé aux éléments de fixation (301, 302).

12. Patch de détection (110) selon l'une des revendications 6 à 11, sachant que les éléments de fixation (301, 302), conjointement avec le support intermédiaire (500), constituent une structure de convertisseur avec un dispositif de renforcement de signal mécanique sans levier qui est conçu de telle sorte qu'un changement longitudinal relatif du premier écartement (403) exercé sur l'élément de détection (111) est plus grand qu'un changement longitudinal relatif du deuxième écartement (505) exercé sur le support intermédiaire (500).

13. Patch de détection (110) selon l'une des revendications 1 à 12, sachant que la structure de support est exécutée d'une seule pièce, et/ou sachant que la structure de support contient un matériau qui est choisi dans le groupe constitué par le plastique renforcé à la fibre de verre, l'acier, l'aluminium d'un alliage, le plastique renforcé à la fibre de carbone et toute combinaison de ceux-ci.

14. Procédé de fabrication d'un patch de détection (110), comprenant :

la fourniture d'une structure de support présentant un premier et un deuxième élément de fixation (301, 302) ;
la pose d'un conducteur optique (112) entre le premier et le deuxième élément de fixation (301, 302) ;
la fixation du conducteur optique aux éléments de fixation (301, 302) ;
la précontrainte du conducteur optique (112) moyennant un élément élastique (506) disposé entre les éléments de fixation (301, 302) ;
l'apposition de la structure de support sur un support intermédiaire (500); et
le recouvrement de la structure de support avec un élément de recouvrement (303) de telle sorte que le conducteur optique (112) passe dans la fibre neutre (900) du patch de détection (110).

15. Procédé selon la revendication 14, sachant que le conducteur optique (112) est collé aux éléments de fixation (301, 302), et/ou sachant qu'une dilatation thermique du support intermédiaire (500) est au moins en partie compensée par une dilatation thermique de la structure de support, et/ou sachant que la structure de support, le support intermédiaire (500) et l'élément de recouvrement (303) sont collés comme une unité conjointement avec le conducteur optique (112).

EP 3 353 500 B1

**Fig. 1A**

**Fig. 1B**

15

# Fig. 2A

# Fig. 2B

# Fig. 3A

110

401  111  113  402  115  112

506

# Fig. 3B

110  303  506  112

507  507  113

# Fig. 4

## Fig. 5

## Fig. 6

# Fig. 7

**801** → START

**802** → Bereitstellen einer Trägerstruktur mit einem ersten und einem zweiten Befestigungselement 301, 302

**803** → Verlegen eines Lichtleiters 112 zwischen den ersten und zweiten Befestigungselementen 301, 302

**804** → Befestigen des Lichtleiters 112 an den Befestigungselementen 301, 302

**805** → Vorspannen des Lichtleiters 112 mittels eines zwischen den Befestigungselementen 301, 302 angeordneten elastischen Elements 506

Anbringen der Trägerstruktur auf einem Zwischenträger 500 **806**

Abdeckens der Trägerstruktur mit einem Abdeckelement 303 derart, dass der Lichtleiter 112 in der neutralen Faser 900 des Sensorpatches 110 verläuft **807**

→ ENDE

**808**

**IN DER BESCHREIBUNG AUFGEFÜHRTE DOKUMENTE**

**In der Beschreibung aufgeführte Patentdokumente**

- US 6393181 B1
- DE 19922102 A1
- DE 69837752 T2
- US 6510272 B1